Europäisches Patentamt

European Patent Office

Office européen des brevets

(19)

(11) Veröffentlichungsnummer: **0 124 822**
**A2**

(12) # EUROPÄISCHE PATENTANMELDUNG

(21) Anmeldenummer: 84104576.8

(22) Anmeldetag: 24.04.84

(51) Int. Cl.³: **H 01 H 9/02**

(30) Priorität: 09.05.83 DE 3316976

(43) Veröffentlichungstag der Anmeldung:
14.11.84 Patentblatt 84/46

(84) Benannte Vertragsstaaten:
AT CH DE IT LI SE

(71) Anmelder: Siemens Aktiengesellschaft
Berlin und München Wittelsbacherplatz 2
D-8000 München 2(DE)

(72) Erfinder: Zirkl, Siegmar
Klenzestrasse 4
D-8400 Regensburg(DE)

(54) Elektronischer Installationsschalter.

(57) Die Erfindung betrifft einen elektronischen Installationsschalter mit einem Träger für elektrische Bauelement. Es ist vorgesehen, daß der Träger als flaches Gehäuse (1) ausgebildet ist. An dessen Boden ist eine Art Hängebügel (30) angeordnet, der mittels Haltelaschen (31) mit dem Träger verrastbar ist. Ein Klemmenkasten (18), der Anschlußklemmen (19) für Zuleitungen (37) und eine Sicherung (20) aufnimmt, ist in einer Ausnehmung (14) einer Bodenplatte (13) des Trägers nach Art von Nut und Feder gehalten. Außerdem weist das Gehäuse (1) in einer Seitenfläche (23) eine Öffnung (24) auf, durch die eine Sicherung (20) mittels eines klauenförmigen Sicherungshalters (25) in Sicherungshaltefedern (26) einführbar ist.

EP 0 124 822 A2

./...

FIG 1

0124822

SIEMENS AKTIENGESELLSCHAFT          Unser Zeichen:
Berlin und München                  VPA 83 P 3 1 4 6 E

Elektronischer Installationsschalter

Die Erfindung betrifft einen elektronischen Installationsschalter mit einem Träger für elektrische Bauelemente.

Derartige Schalter sind bekannt. Sie weisen eine große
Anzahl elektrischer Bauelemente auf und haben daher ein
großes Volumen, so daß Aufputzmontage nicht immer den
Erfordernissen des Marktes gerecht wird. Üblicherweise
wird daher eine aufwendigere Montage unter Putz in einer
in die Wand eingelassenen Dose bevorzugt.

Der Erfindung liegt die Aufgabe zugrunde, einen elektronischen Installationsschalter zu entwickeln, der bei
ästhetisch ansprechender Ausbildung besonders montage-,
wartungs- und reparaturfreundlich auf Putz zu montieren
ist, wobei alle Bauelemente, z.B. auch für einen Zeitschalter, in einem Träger enthalten sind.

Diese Aufgabe wird erfindungsgemäß dadurch gelöst,

- daß der Träger als flaches Gehäuse ausgebildet ist,
  an dessen Boden eine Art Hängebügel angeordnet ist,
  der mittels Haltelaschen mit dem Träger verrastbar ist,

- daß ein Klemmenkasten, der Anschlußklemmen für Zuleitungen und eine Sicherung aufnimmt, in einer Ausnehmung einer Bodenplatte des Trägers nach Art von Nut
  und Feder gehalten ist, und

2.5.1983 Mnl 2 Ant

- 2 -    VPA    83 P 3146 E

- daß das Gehäuse in einer Seitenfläche eine Öffnung aufweist, durch die eine Sicherung mittels eines klauenförmigen Sicherungshalters in Sicherungshaltefedern einführbar ist.

Die flache Bauweise des Trägers ermöglicht es, den elektronischen Installationsschalter als Aufputzschalter einzusetzen, wobei er nicht mehr von der Wand absteht als herkömmliche Unterputzschalter. Gleichzeitig weist der Schalter alle Vorteile einer Aufputzmontage auf: So ist zur Befestigung an einer Wand im wesentlichen nur das Setzen von Dübeln notwendig. Ein solcher Schalter kann auch vorteilhaft auf allen anderen ebenen Oberflächen leicht montiert werden. Neben einer Verschraubung ist auch eine Befestigung in Klebetechnik möglich.

Der Installationsschalter kann daher außer an Mauerwänden auch an der Holzverkleidung elektrischer Geräte oder an Holzwänden von Möbeln montiert werden.

Schnelles und einfaches Auswechseln einer Sicherung im Träger für elektrische Bauelemente des Schalters vereinfacht dabei die Wartung.

Das Gehäuse läßt sich auf eine Art Hängebügel ohne Einsatz von Werkzeug anbringen. Zum Lösen kann das Gehäuse von den Haltelaschen des an der Wand angeschraubten Hängebügels abgezogen werden, wodurch sich auch Reparaturen leicht durchführen lassen. Wenn man das Gehäuse vom Hängebügel gelöst hat, sind die Anschlußklemmen und die Sicherungen im Klemmenkasten sofort leicht zugänglich, was das Anschließen erleichtert. Wenn nur eine Sicherung ausgetauscht werden soll, kann der Schalter an der Wand bleiben. Dazu weist das Gehäuse in einer seiner Seitenflächen eine Öffnung auf, in die ein klauenförmiger Sicherungshalter einführbar ist. Dieser kann in zwei mit Kontakten versehenen Sicherungshaltefedern eine Sicherung einklemmen.

Nach einer Ausgestaltung der Erfindung sind an den Seitenwänden des Gehäuses Klemmhalterungen ausgebildet, die federnde Stifte aufnehmen. Diese Stifte hintergreifen Haltelaschen am Hängebügel. Das Gehäuse kann somit auf den Hängebügel leicht aufgeschnappt werden, was eine stabile mechanische Verbindung ergibt. Durch Hintergreifen des Gehäuserandes mit einem spitzen Werkzeug können erfindungsgemäß die federnden Stifte zurückgebogen und das Gehäuse damit leicht vom Hängebügel abgenommen werden.

Weiterhin ist ein Zierrahmen vorgesehen, der die Seitenflächen des Gehäuses überdeckt. An seinen Innenflächen weist dieser Rahmen elastische Taschen auf. Zusätzliche Zapfen an den Rändern des Hängebügels ragen senkrecht vor und können in die elastischen Taschen des Rahmens eingreifen. Dadurch wird der Vorteil erzielt, daß der Rahmen auf den Hängebügel manuell aufsteckbar ist und auch ohne Einsatz von Werkzeugen entfernt werden kann. Die Ausbildung dieser Taschen und Zapfen stellt dabei vorschriftsgemäße Abzugskräfte sicher.

Die elektrischen Bauelemente sind im Träger auf einer Leiterplatte angeordnet und verlötet. Befindet sich dort auch ein Regelpotentiometer, wie es für Zeitschalter benötigt wird, so läßt man sein Betätigungselement durch eine Öffnung im Gehäuse herausragen. Es ist daher vorteilhaft möglich, nach Abnehmen nur des Zierrahmens die Einstellung des Regelpotentiometers zu verändern. Das ist notwendig, wenn z.B. die Einschaltdauer des Zeitschalters verändert werden soll.

Nach einer weiteren Ausgestaltung ist ein Triac auf der Leiterplatte so eingelötet, daß seine Kühlfahne mit einer Aluminiumblechbodenplatte verbunden ist. Durch die zur Verfügung stehende größere Metallfläche ist eine effektivere Kühlung gewährleistet.

Nach einer Ausgestaltung der Erfindung kann der Sensor des elektronischen Schalters als Berührungssensor ausgebildet sein. Dazu ist die Frontfläche des Gehäuses metallisiert und mit der Elektronik auf der Leiterplatte leitend verbunden.

Eine weitere Ausgestaltung sieht einen Folienkontakt vor, der in einer Aussparung in der Frontfläche des Gehäuses befestigt und mit der Elektronik verbunden ist. Der Einsatz derartiger Sensoren ermöglicht eine flachere Bauweise, als sie bei Verwendung mechanischer Schalter möglich wäre.

Eine im Gehäuse anbringbare Glimmlampe kann von außen durch eine lichtdurchlässige Stelle in der Frontfläche des Gehäuses erkannt werden. Die Glimmlampe kann zur Orientierung im Dunkeln dienen.

Die Erfindung soll anhand eines in der Zeichnung grob schematisch wiedergegebenen Ausführungsbeispieles näher erläutert werden:

Fig. 1  zeigt den erfindungsgemäßen elektronischen Installationsschalter in Explosionsdarstellung.

Fig. 2  zeigt den elektronischen Installationsschalter
unmittelbar vor dem Verrasten von Träger und
Hängebügel.

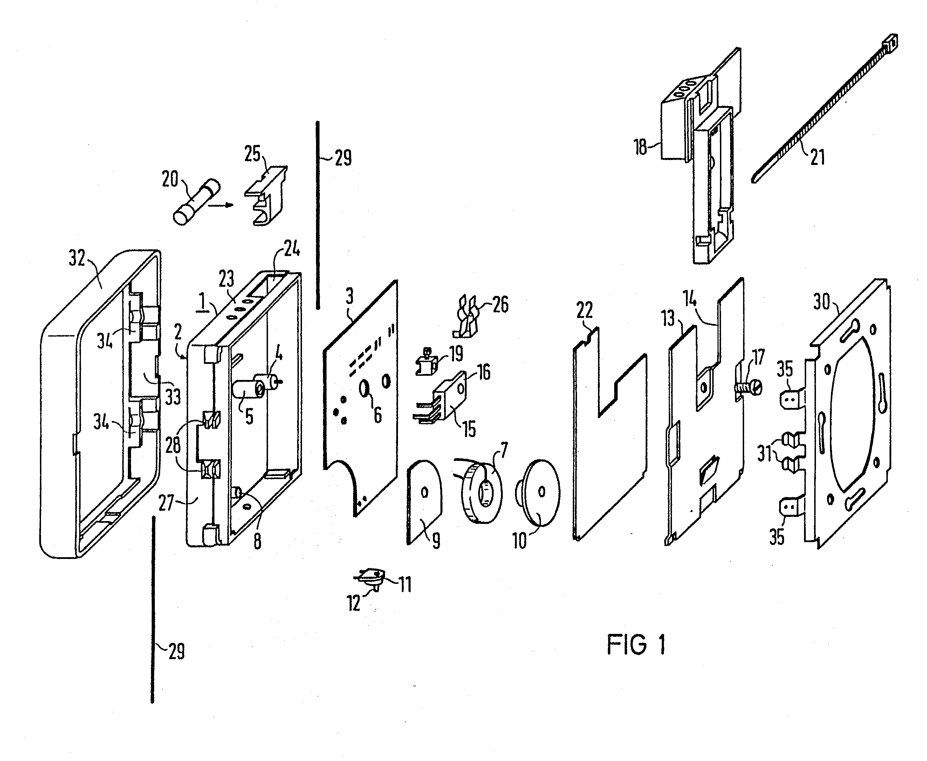

Der elektronische Installationsschalter nach Fig. 1
weist als Träger für elektrische Bauelemente ein flaches
Gehäuse 1 aus isolierendem Material auf, dessen Frontfläche 2 einen Sensor, wie z.B. einen Berührungssensor
oder einen Folienkontakt, aufnimmt. In dem Gehäuse ist
eine Leiterplatte 3 angeordnet, die mit der Frontfläche 2 über einen Isolator 4 mit Metallseele verbunden
ist. Ein Distanzstück 5 mit Gewinde durchdringt die
Leiterplatte 3 an einer dafür vorgesehenen Bohrung 6. Auf
der Leiterplatte 3 sind alle benötigten elektrischen
Bauelemente eingelötet mit Ausnahme einer Ringkerndrossel 7, die auf einem separaten Stift 8 im Inneren
des Gehäuses 1 zwischen zwei Weichgummischeiben 9 und
10 ruht. Die Leiterplatte 3 kann auch in Schrägstellung
in das Gehäuse 1 eingefügt werden, wobei sie z.B. in
zwei Ecken einrastet. Ein Regelpotentiometer 11, wie es
für einen Zeitschalter benötigt wird, ist am Rand der
Leiterplatte 3 eingelötet, so daß sein Betätigungselement 12 durch eine Öffnung im Gehäuse 1 herausragt.

Eine Aluminiumblechbodenplatte 13, die eine Ausnehmung
14 aufweist, ist mit dem Distanzstück 5 verschraubt und
befestigt die Leiterplatte 3 und gleichzeitig einen
Klemmenkasten 18. Dabei drückt der Klemmenkasten 18 die
Leiterplatte 3 im Gehäuse 1 an.

Ein auf der Leiterplatte 3 eingelöteter Triac 15 weist eine durchbohrte Kühlfahne 16 auf, die von der Befestigungsschraube 17 durchdrungen mit der Aluminiumblechbodenplatte 13 in Verbindung steht und somit gute Wärmeableitung gewährleistet.

Der Klemmenkasten 18, der Anschlußklemmen 19 für die Zuleitungen und eine Sicherung 20 aufnimmt, ist in der Ausnehmung 14 in der Bodenplatte 13 eingepaßt und nach der Art von Nut und Feder arretiert. Ein Kabelbinder 21 befestigt die Zuleitungskabel.

Zwischen Leiterplatte 3 und Aluminiumblechbodenplatte 13 ist eine Isolierplatte 22 eingeklemmt. Diese ist so geformt, daß sie alle elektrischen Bauelemente auf der Leiterplatte 3 außer Triac 15, Anschlußklemmen 19 und Sicherung 20 abdeckt.

In einer Seitenfläche 23 des Gehäuses 1 befindet sich eine Öffnung 24, durch die die Sicherung 20 mittels eines klauenförmigen Sicherungshalters 25 auch dann in zwei Sicherungshaltefedern 26, die Kontakte aufweisen, einführbar ist, wenn Aluminiumblechbodenplatte 13 und Gehäuse 1 verschraubt sind. In Fig. 1 ist eine der beiden Sicherungshaltefedern 26 dargestellt.

An gegenüberliegenden Seitenwänden 27 des Gehäuses 1 sind Klemmhalterungen 28 ausgebildet, die Stahlstifte 29 aufnehmen. Ein Hängebügel 30, der an einer ebenen Oberfläche befestigbar ist, weist an seinen Seitenkanten Haltelaschen 31 auf, die winkelig gebogen sind. Die Stahlstifte 29 des Gehäuses 1 hintergreifen diese Haltelaschen 31, so daß das Gehäuse 1 mit dem Hängebügel 30 verrastbar ist.

Ein Rahmen 32 überdeckt die Seitenflächen des montierten Gehäuses 1 und läßt nur dessen Frontfläche 2 frei. An seinen Innenflächen 33 und parallel zu diesen weist der Rahmen 32 elastische Taschen 34 auf. Am Hängebügel 30 angeformte Zapfen 35 greifen in diese elastischen Taschen 34 ein und arretieren den Rahmen 32.

Die nach der Montage noch freiliegende Frontfläche 2 des Gehäuses 1 ist als Sensor ausgebildet. Als Berührungssensor ist auf der Frontfläche 2 eine dünne Metallschicht aufgebracht. Es kann auch in einer Aussparung in der Frontfläche 2 des Gehäuses 1 ein Folienkontakt angeordnet sein. Befindet sich auf der Leiterplatte 3 eine Glimmlampe, dann besteht die Frontfläche 2 des Gehäuses 1 in dem Bereich vor der Glimmlampe aus durchsichtigem, isolierendem Material.

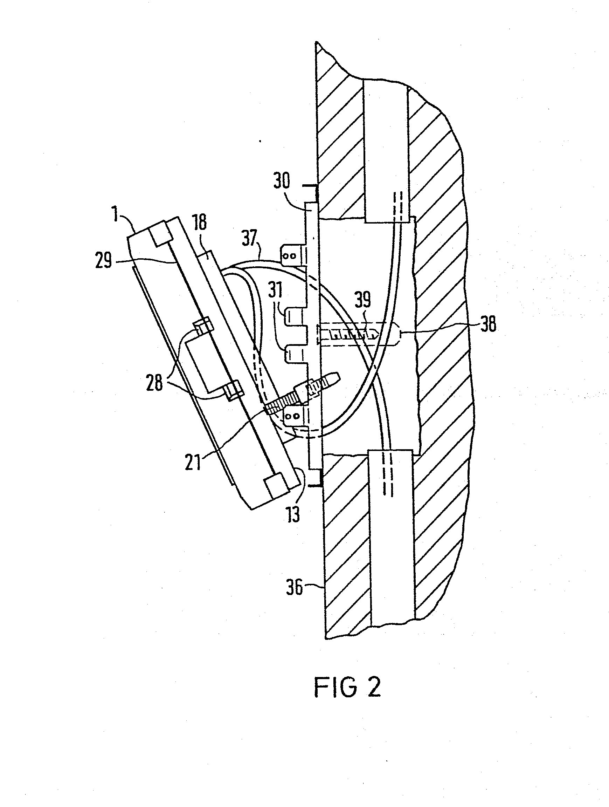

Das montierte Gehäuse 1 mit Aluminiumblechbodenplatte 13 und Klemmenkasten 18 nach Fig. 2 weist Klemmhalterungen 28 auf, die Stahlstifte 29 halten. Diese Stahlstifte 29 sind mit Haltelaschen 31 verrastbar, die an dem auf der Wand 36 montierten Hängebügel 30 angeformt sind. Die Versorgungsleitungen 37 sind mit einem Kabelbinder 21 befestigt und im Klemmenkasten 18 angeschlossen. Zur Befestigung des Hängebügels 30 auf der Wand 36 dienen Schrauben 39 und Dübel 38. Der Hängebügel 30 kann auch aufgeklebt werden.

Der Abdeckrahmen 32 für das Gehäuse 1 ist in Fig. 2 nicht dargestellt.

2 Figuren

8 Patentansprüche

Patentansprüche

1. Elektronischer Installationsschalter mit einem Träger für elektrische Bauelemente, d a d u r c h   g e - k e n n z e i c h n e t ,

- daß der Träger als flaches Gehäuse (1) ausgebildet ist, an dessen Boden eine Art Hängebügel (30) angeordnet ist, der mittels Haltelaschen (31) mit dem Träger verrastbar ist,

- daß ein Klemmenkasten (18), der Anschlußklemmen (19) für Zuleitungen (37) und eine Sicherung (20) aufnimmt, in einer Ausnehmung (14) einer Bodenplatte (13) des Trägers nach Art von Nut und Feder gehalten ist, und

- daß das Gehäuse (1) in einer Seitenfläche (23) eine Öffnung (24) aufweist, durch die eine Sicherung (20) mittels eines klauenförmigen Sicherungshalters (25) in Sicherungshaltefedern (26) einführbar ist.

2. Elektronischer Installationsschalter nach Anspruch 1, d a d u r c h   g e k e n n z e i c h n e t , daß an Seitenwänden (27) des Gehäuses (1) Klemmhalterungen (28) ausgebildet sind, die gegebenenfalls federnde Stifte (29) aufnehmen, welche die Haltelaschen (31) des Hängebügels (30) hintergreifen.

3. Elektronischer Installationsschalter nach Anspruch 1, d a d u r c h   g e k e n n z e i c h n e t , daß ein die Seitenflächen des Gehäuses (1) überdeckender Rahmen (32) parallel zu seinen Innenflächen an diesen elastische Taschen (34) aufweist, die am Hängebügel (30) angeformte Zapfen (35) aufnehmen.

4. Elektronischer Installationsschalter nach Anspruch 1, d a d u r c h   g e k e n n z e i c h n e t , daß ein Regelpotentiometer (11) für Zeitschalter auf einer Leiterplatte (3) im Träger eingelötet ist, wobei sein Betätigungselement (12) durch eine Öffnung im Gehäuse (1) herausragt.

5. Elektronischer Installationsschalter nach den Ansprüchen 1 und 4, d a d u r c h   g e k e n n - z e i c h n e t , daß auf der Leiterplatte (3) ein Triac (15) eingelötet ist, und daß seine Kühlfahne (16) mit einer Aluminiumblechbodenplatte (13) des Gehäuses (1) verbunden ist.

6. Elektronischer Installationsschalter nach Anspruch 1, d a d u r c h   g e k e n n z e i c h n e t ,  daß die Frontfläche (2) des Gehäuses (1) metallisiert als Berührungssensor ausgebildet ist.

7. Elektronischer Installationsschalter nach Anspruch 1, d a d u r c h   g e k e n n z e i c h n e t,  daß eine Aussparung in der Frontfläche (2) des Gehäuses (1) einen Folienkontakt aufnimmt.

8. Elektronischer Installationsschalter nach Anspruch 1, d a d u r c h   g e k e n n z e i c h n e t ,  daß eine Glimmlampe hinter einer lichtdurchlässigen Stelle in der Frontfläche (2) und hinter einer Öffnung in der Leiterplatte (3) auf der Leiterplatte (3) eingelötet ist.

FIG 1

FIG 2